(19) Europäisches Patentamt
European Patent Office
Office européen des brevets

(11) **EP 3 246 694 A1**

(12) **EUROPEAN PATENT APPLICATION**
published in accordance with Art. 153(4) EPC

(43) Date of publication:
**22.11.2017 Bulletin 2017/47**

(51) Int Cl.:
*G01N 21/39* (2006.01)    *F23N 1/02* (2006.01)
*F23N 5/00* (2006.01)    *F23N 5/08* (2006.01)
*G01K 11/00* (2006.01)    *G01N 21/3504* (2014.01)
*G01N 21/3554* (2014.01)

(21) Application number: **15887752.2**

(22) Date of filing: **25.11.2015**

(86) International application number:
**PCT/JP2015/083005**

(87) International publication number:
**WO 2016/157610 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.03.2015 JP 2015066847**

(71) Applicant: **Mitsubishi Heavy Industries, Ltd. Tokyo 108-8215 (JP)**

(72) Inventors:
• **OKA, Hirotaka**
**Tokyo 108-8215 (JP)**
• **NISHIMIYA, Tatsuyuki**
**Tokyo 108-8215 (JP)**
• **KAWAZOE, Kohei**
**Tokyo 108-8215 (JP)**

(74) Representative: **Henkel, Breuer & Partner Patentanwälte**
**Maximiliansplatz 21**
**80333 München (DE)**

(54) **GAS ANALYSIS DEVICE, CONTROL SYSTEM AND CONTROL ASSISTANCE SYSTEM FOR COMBUSTION EQUIPMENT, AND GAS ANALYSIS METHOD**

(57) A gas analysis device is provided with: a measuremrnt unit that uses a plurality of measurement passes to measure the absorption amount of laser light including an absorption wavelength corresponding to at least two electron level transitions in the same component included in a combustion gas within a combustion furnace; a standard setting unit that sets a standard gas concentration distribution and a standard temperature distribution; and an analysis unit that determines a gas concentration distribution and a temperature distribution by solving a two-dimensional distribution function in which the gas concentration distribution and the temperature distribution are included as variables such that the minimum deviation between the actual measured absorption amount and a standard absorption amount is achieved.

FIG. 3

**EP 3 246 694 A1**

**Description**

TECHNICAL FIELD

The present disclosure relates to a gas analysis device for analyzing a gas concentration distribution and a temperature distribution inside a furnace, a control system and a control assistance system for a combustion facility provided with the gas analysis device, and a gas analysis method performed by the gas analysis device.

BACKGROUND ART

In a combustion facility such as a boiler for combusting fuel and a garbage incinerator for combusting garbage, high-temperature combustion air (gas) is produced from combustion of substances in the furnace. In a combustion facility, it is desirable to measure a gas concentration distribution and a temperature distribution inside the furnace to optimize or monitor the combustion state. Such a gas concentration distribution and a temperature distribution inside the furnace can be normally obtained at a certain level of accuracy through actual measurement at some points in the furnace if the gas concentration and the temperature are uneven and the size of the furnace is relatively small. However, if the furnace is extensive, there is only a limited number of methods for measurement. A known type of such measurement method is to calculate a gas concentration and a temperature as a two-dimensional distribution, by analyzing a cumulative value of an absorption amount of laser light with a computation processing device like a computer, in a plurality of measurement paths in which laser light is emitted so as to transmit through combustion gas inside the furnace from a plurality of laser ports provided for the furnace.

In this method, an analysis parameter is set for each of the measurement paths for laser emission. Thus, to improve the analysis accuracy, it is necessary to provide a sufficient number of laser ports. However, an actual combustion facility such as a boiler is equipped with piping that carries a fluid (coolant water) to be heated by combustion air inside the furnace, and the piping is arranged along the inner wall of the furnace. Thus, only a limited number of laser ports can be provided.

Patent Document 1 discloses a solution to the above problem. In Patent Document 1, mesh division is performed on the two-dimensional space inside the furnace to be laser-measured, and a gas concentration value is calculated on the basis of the laser absorption amount in each mesh. Then, assuming that the distribution of gas concentration in each mesh is the continuous Gausian Process (GP), a solution is sought by the Bayesian method to obtain the gas concentration distribution. As described above, in Patent Document 1, the condition of continuity is required to be satisfied, and thereby a reliable analysis result can be obtained even if there is a small number of analysis parameters.

Citation List

Patent Literature

Patent Document 1: JP2006-522938A (translation of a PCT application)

SUMMARY

Problems to be Solved

Concentration measurement that uses laser light as in Patent Document 1 is based on the absorption amount that depends on electronic level transition that corresponds to components contained in combustion air. The laser absorption amount has a characteristic of depending not only on the concentration but also on the temperature of combustion air. According to Patent Document 1, a concentration distribution close to an actual one is obtained by imposing the condition of continuity on a concentration distribution obtained on the basis of the laser absorption amount. However, in the process of deriving the concentration out from the laser absorption amount, the dependence of the laser absorption amount on the temperature is not taken into consideration, which may prevent achievement of a sufficient analysis accuracy.

At least one embodiment of the present invention was made in view of the above described problem, and an object is to provide a gas analysis device for accurately analyzing a gas concentration distribution and a temperature distribution in a system in which combustion gas inside a furnace is not evenly mitigated, a control system and a control assistance system for a combustion facility, and a gas analysis method.

2

Solution to the Problems

(1) To solve the above problem, a gas analysis device according to at least one embodiment of the present invention is for analyzing a concentration distribution of a combustion gas in a furnace and a temperature distribution inside the furnace, and the gas analysis device comprises: a measurement part configured to measure an absorption amount of a laser light including an absorption wavelength corresponding to at least two electronic level transitions having the same component contained in the combustion gas, by emitting the laser light on a plurality of measurement paths disposed so as to pass through the combustion gas; a standard setting part configured to set a standard gas concentration distribution and a standard temperature distribution on the basis of a measurement result of the measurement part; and an analysis part configured to obtain the gas concentration distribution and the temperature distribution by solving a function including the gas concentration distribution and the temperature distribution as variables so as to minimize a difference between the absorption amount measured by the measurement part and a standard absorption amount obtained on the basis of the standard gas concentration distribution and the standard temperature distribution.

With the above configuration (1), when obtaining the gas concentration distribution and the temperature distribution on the basis of the absorption amount of the laser light in the plurality of measurement paths passing through the combustion gas, the gas concentration distribution and the temperature distribution are obtained by solving a function including the gas concentration distribution and the temperature distribution as variables by numerical analysis so as to minimize a difference between the absorption amount measured by the measurement part and a standard absorption amount obtained on the basis of the standard distribution set by the standard setting part. Such a function includes the concentration distribution and the temperature distribution as a common variable, and thus can reflect the correlation between the concentration and the temperature, which is an actual phenomenal background. Thus, it is possible to obtain an analysis solution closer to the actual distribution, and to distinguish the effects of the gas concentration and the temperature on the absorption amount (for instance, it is possible to distinguish a decrease in the absorption amount due to a temperature increase from a decrease in the absorption amount due to a gas-concentration decrease). As described above, according to the present embodiment, even in a situation in which only a limited number of laser ports can be disposed in the furnace, it is possible to obtain a gas concentration distribution and a temperature distribution closer to those of the actual system taking into consideration the temperature dependency of the absorption amount of the laser light.

(2) In some embodiments, in the above configuration (1), the function is set corresponding to a shape of the furnace.

With the above configuration (2), using a function corresponding to the shape of the furnace containing combustion gas to be analyzed makes it possible to seek a solution closer to an actual value efficiently when solving the function during analysis.

(3) In some embodiments, in the above configuration (2), the function is set so as to include at least one of a center axis position, a coordinate ovalization rate, or a circumferential distribution term as a parameter, with respect to a cylindrical coordinate system.

With the above configuration (3), the shape of the furnace is determined with the above parameters, and thus it is possible to express the gas concentration distribution and the temperature distribution with fewer parameters. Accordingly, the computation load for solving the function is reduced, and it is possible to seek a solution closer to the actual system efficiently.

(4) In some embodiments, in any one of the above configurations (1) to (3), the standard setting part is configured to set the standard concentration distribution and the standard temperature distribution on the basis of an average temperature of the combustion gas obtained on the basis of a ratio of the absorption amount at wavelengths corresponding to different electronic level transitions included in the laser light in the plurality of measurement paths.

With the above configuration (4), an average temperature inside the furnace is calculated on the basis of the laser absorption amount in the plurality of measurement paths, and the standard concentration distribution and the standard temperature distribution are set on the basis of the average temperature. The standard concentration distribution and the standard temperature distribution set as described above serve as initial values suitable for seeking a final solution efficiently when the function is solved by numerical analysis. For instance, the standard temperature distribution may be set as a situation in which the temperature distribution in the furnace is in relaxation at the average temperature obtained as described above. Alternatively, a gradient may be applied to the distribution if the Marquardt method is used for the convergence analysis calculation.

(5) In some embodiments, in the above configuration (4), the same component is $H_2O$.

With the above configuration (5), compared to $O_2$, $CO_2$, and the like, $H_2O$ has an absorption wavelength range corresponding to adjacent two electronic level transitions in a relatively close range. Thus, if the wavelength of the laser light is scanned by controlling a driving current of a laser diode of a wavelength sweep type, it is possible to cover adjacent two electronic level transitions within the sweep range of a single laser diode, which makes it possible to simplify the device configuration.

(6) To solve the above problem, a control system for a combustion facility according to at least one embodiment of the present invention comprises: a fuel supply unit configured to supply fuel to the furnace; an air supply unit configured to supply air to the furnace; the gas analysis device according to any one of the above (1) to (5); and a control unit configured to control a supply amount of the fuel and the air to the furnace by adjusting the fuel supply unit and the air supply unit on the basis of the gas concentration distribution and the temperature distribution analyzed by the gas analysis device.

With the above configuration (6), the fuel supply unit and the air supply unit are adjusted on the basis of the gas concentration distribution and the temperature distribution obtained by gas analysis in the furnace, and thereby it is possible to control the amount of fuel and air to the furnace. Accordingly, it is possible to achieve an optimum operation in which the temperature unbalance of combustion gas and excess/shortage of oxygen supply in the furnace are solved, and to improve the power generation efficiency and suppress an increase in the NOx generation due to excessive $O_2$.

(7) To solve the above problem, a control assistant system for a combustion facility according to at least one embodiment of the present invention comprises: a fuel supply unit configured to supply fuel to the furnace; an air supply unit configured to supply air to the furnace; the gas analysis device according to any one of claims 1 to 5; and a display unit configured to display the gas concentration distribution and the temperature distribution analyzed by the gas analysis device.

With the above configuration (7), the analysis result of the gas analysis device is visualized through display on a display unit such as a display monitor, thus making it possible for an operator of the combustion facility to easily determine the combustion state inside the furnace, and thereby it is possible to improve the efficiency of the operator's work to adjust the fuel condition.

(8) To solve the above problem, a gas analysis method for analyzing a concentration distribution of combustion gas and a temperature distribution inside a furnace, according to at least one embodiment of the present invention, comprises: a measurement step of measuring an absorption amount of a laser light including an absorption wavelength corresponding to at least two electronic level transitions having the same component contained in the combustion gas, by emitting the laser light on a plurality of measurement paths disposed so as to pass through the combustion gas; a standard setting step of setting a standard gas concentration distribution and a standard temperature distribution on the basis of a measurement result in the measurement step; and an analysis step of obtaining the gas concentration distribution and the temperature distribution by solving a function including the gas concentration distribution and the temperature distribution as variables so as to minimize a difference between the absorption amount measured in the measurement step and a standard absorption amount obtained on the basis of the standard gas concentration distribution and the standard temperature distribution.

The above method (8) can be suitably performed by the above described gas analysis device (including the above various configurations).

Advantageous Effects

According to at least one embodiment of the present embodiment, it is possible to provide a gas analysis device for accurately analyzing a gas concentration distribution and a temperature distribution in a system in which combustion gas inside a furnace is not evenly mitigated, a control system and a control assistance system for a combustion facility, and a gas analysis method.

BRIEF DESCRIPTION OF DRAWINGS

FIG. 1 is a schematic configuration diagram of a combustion facility provided with a gas analysis device according to at least one embodiment of the present invention.
FIG. 2 is a schematic diagram for describing each region of the furnace in FIG. 1.
FIG 3 is a cross-sectional view taken along line A-A in FIG. 1.
FIG 4 is a block diagram showing a configuration of an infrared measurement analysis unit in FIG 1.
FIG 5 is a flowchart showing steps of a gas analysis method performed by the infrared measurement analysis unit in FIG 4.
FIG 6 is an example of an absorption spectrum measured by a measurement laser light receiving system.
FIG 7 is a flowchart showing steps of a method for controlling a distribution control unit performed by the infrared measurement analysis unit in FIG. 4.

FIG 8 is a schematic diagram of a configuration of a combustion device according to another embodiment of the present embodiment.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

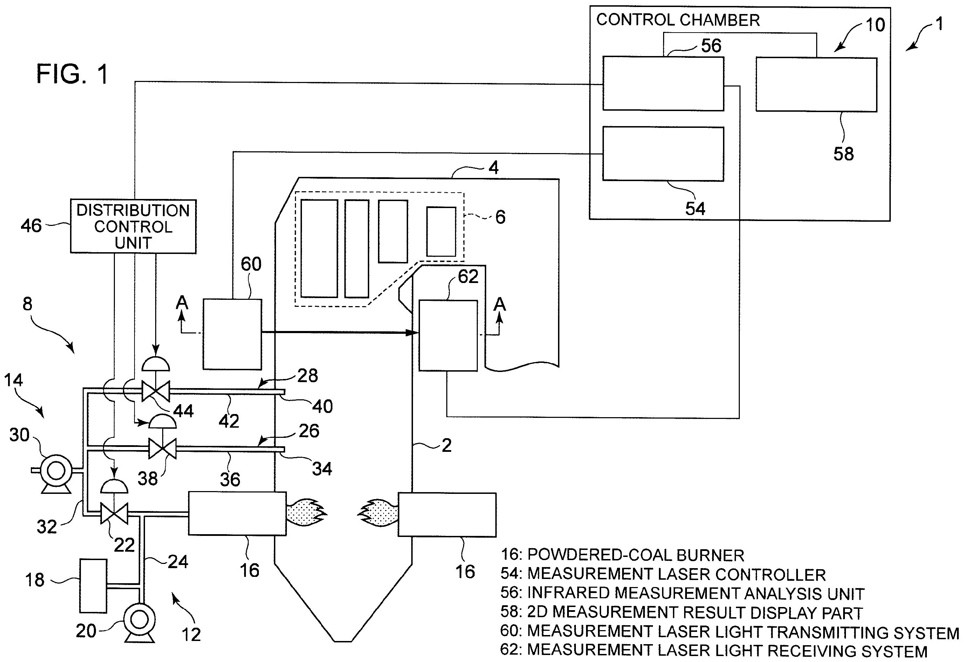

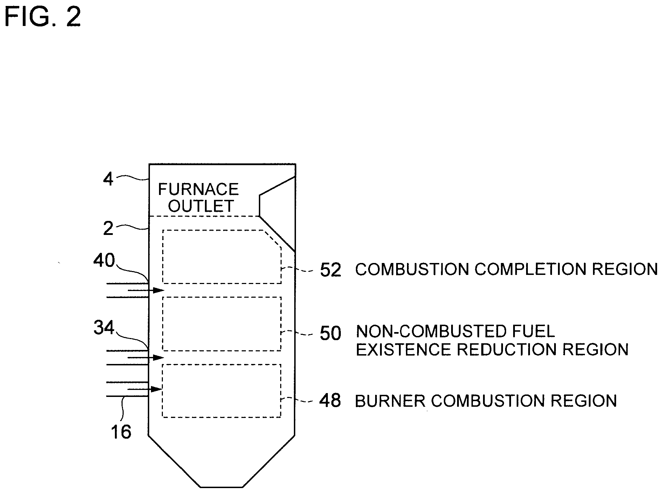

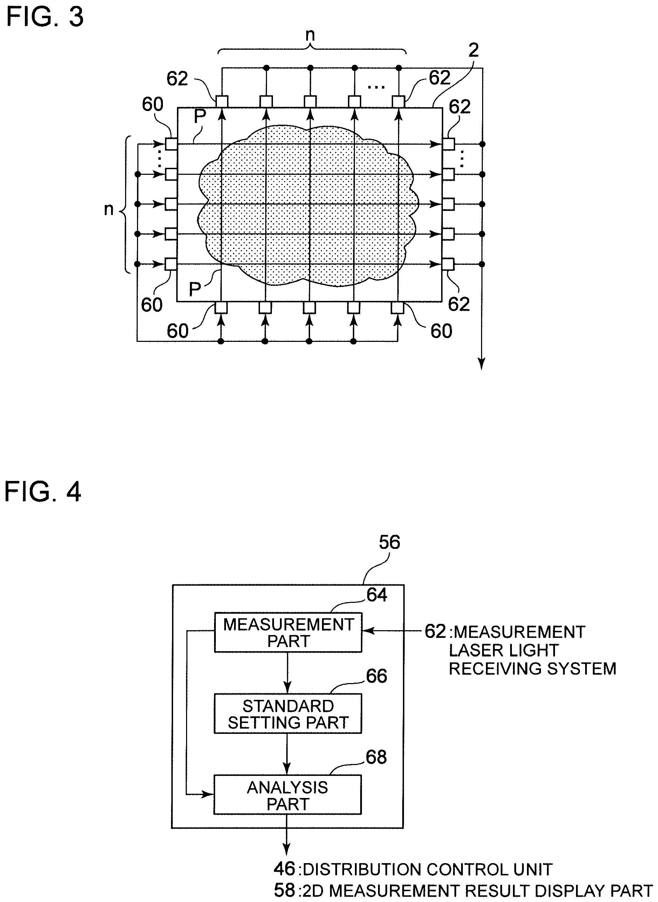

With reference to FIGs. 1 to 3, an overall configuration of a combustion facility 1 provided with a gas analysis device according to at least one embodiment of the present invention will be described. FIG 1 is a schematic diagram of a combustion facility 1 provided with a gas analysis device according to at least one embodiment of the present invention. FIG 2 is a schematic diagram for describing each region of the furnace in FIG 1. FIG. 3 is a cross-sectional view taken along line A-A in FIG 1.

The combustion facility 1 includes a combustion furnace 2 for combusting fuel, a flue 4 for guiding combustion air produced in the furnace 2, a re-heating unit 6 for obtaining thermal energy from the combustion air, a combustion controller 8 for controlling a combustion state inside the furnace 2 by adjusting supply of fuel and air to the furnace 2, and a gas analysis device 10 which analyzes the combustion air (gas) in the furnace 2.

The furnace 2 is configured to be surrounded by a wall surface comprising a heat resistant material in a substantially box shape. In the furnace 2, fuel and air supplied from the combustion controller 8 described below is combusted, and thereby high-temperature combustion air is produced. The furnace 2 has an upper side, in the vertical direction, open, and the open side is connected to the flue 4. The high-temperature combustion air produced in the furnace 2 forms a flow path so as to be guided into the flue 4.

The re-heating unit 6 comprises a plurality of re-heaters, and is disposed in the flow path of the combustion air in the furnace 2 and the flue 4. A re-heater comprises a piping member, and a liquid or a gas is sealed inside the piping member. The liquid or gas sealed inside the re-heater obtains thermal energy through heat exchange with high-temperature combustion air, and thereby turns into steam. The steam travels along a predetermined path from the re-heating unit 6, and rotary-drives a non-depicted turbine, thereby converting thermal energy into electrical energy or mechanical energy and outputting the converted energy.

As described above, the combustion facility 1 functions as a generator or a driving machine. However, the usage of the combustion facility 1 is not limited to this, and may be a heater for heating a substance with thermal energy obtained by the re-heating unit 6.

The combustion controller 8 controls a combustion state inside the furnace 2 by adjusting fuel and air supplied to the furnace 2. The combustion controller 8 includes a fuel supply unit 12 and an air supply unit 14 for supplying fuel and air, respectively, to the furnace 2.

The fuel supply unit 12 includes a powdered-coal burner 16 (hereinafter, referred to as "burner" when needed) for combusting fuel, a powdered-coal supply part 18 for supplying a powdered coal that serves as a fuel, a blower 20 for generating a wind for carrying the fuel, a flow-rate adjustment valve 22 for adjusting the flow rate of the fuel, and a pipe 24 connecting the above to one another.

The powdered-coal supply part 18 is a mechanism configured to supply fuel to the pipe 24. The powdered-coal supplied to the pipe 24 is carried through the pipe 24 by the blower 20, and mixed with air introduced from a main pipe 32 of the air supply unit 14 via the flow-rate adjustment valve 22, before being supplied to the burner 16. The burner 16 is a combustor disposed so as to have a nozzle exposed inside the furnace 2. The burner 16 injects a fuel supplied via the pipe 24 and combusts the fuel inside the furnace 2.

The burner 16 is disposed at a plurality of positions inside the furnace 2, preferably in such a layout that air injected from each burner 16 forms a swirling air flow inside the furnace 2.

The powdered-coal supply part 18 may be a mechanism that produces powdered coal by pulverizing coal and supplies the powdered coal to the pipe 24, or a mechanism that stores a powdered coal produced in advance and supplies the stored powdered coal to the pipe 24.

The air supply unit 14 includes a primary-air supply unit 26 and a secondary-air supply unit 28 for supplying primary air and secondary air, respectively, to the furnace 2, a blower 30 which is a blower or a fan for sending air to the primary-air supply unit 26 and the secondary-air supply unit 28 with the above described fuel supply unit 12, and a main pipe 32 connecting the above to one another.

The primary-air supply unit 26 includes a first pipe 36 disposed so that an outlet 34 is exposed inside the furnace 2, and a flow-rate adjustment valve 38 configured to adjust the flow rate of air in the first pipe 36. The first pipe 36 is connected to the main pipe 32 via the flow-rate adjustment valve 38, and is configured to be capable of introducing air taken into the main pipe 32 by the blower 30 to the outlet 34. The outlet 34 is disposed downstream of the burner 16, in the flow path of the combustion air inside the furnace 2. The flow-rate adjustment valve 38 is disposed at a connection part between the main pipe 32 and the first pipe 36, to adjust the amount of air to be supplied to the first pipe 36 from the main pipe 32.

The secondary-air supply unit 28 includes a second pipe 42 disposed so that an outlet 40 is exposed inside the furnace 2, and a flow-rate adjustment valve 44 configured to be capable of adjusting the flow rate of air in the second pipe 42. The second pipe 42 is connected to the main pipe 32 via the flow-rate adjustment valve 44, and is configured to be capable of introducing air taken into the main pipe 32 by the blower 30 to the outlet 40. The outlet 40 is disposed downstream of the outlet 34, in the flow path of the combustion air inside the furnace 2. The flow-rate adjustment valve 44 is disposed at a connection part between the main pipe 32 and the second pipe 42, and adjusts the amount of air to be supplied to the second pipe 42 from the main pipe 32.

The distribution control unit 46 adjusts the opening degrees of the flow-rate adjustment valves 22, 38, 44, and thereby distributes air taken in by the blower 30 to the fuel supply unit 12, the primary-air supply unit 26, and the secondary-air supply unit 28 at a predetermined ratio. In the present embodiment, the distribution control unit 46 is configured to be controlled automatically on the basis of a control signal from an infrared measurement analysis unit disposed in a control chamber.

With the above configuration, as depicted in FIG. 2, formed inside the furnace 2 are a burner combustion region 48, a non-combusted fuel existence reduction region 50, and a combustion completion region 52, from upstream to downstream. The burner combustion region 48 is a region where the fuel injected from the burner 16 is combusted, extending from the outlet 34 to the upstream side. The non-combusted fuel existence reduction region 50 is a region where non-reacted fuel and air supplied from the outlet 34 and the outlet 40 react, in response to supply of the air from the outlet 34 and the outlet 40, which is a region between the outlet 34 and the outlet 40, or in other words a region where the secondary air is supplied. The combustion completion region 52 is a region where the remaining fuel and air react, extending from the downstream side of the outlet 40 to the connection part between the furnace 2 and the flue 4.

Referring again to FIG. 1, the gas analysis device 10 includes a measurement laser controller 54 for controlling laser light emitted to combustion air in the furnace 2 for measurement, an infrared measurement analysis unit 56 for analyzing a measurement result by receiving the emitted laser light, and controlling the distribution control unit 46 on the basis of the analysis result, and a two-dimensional measurement result display part 58 for displaying the analysis result.

A measurement laser light transmitting system 60 and a measurement laser light receiving system 62 are disposed on opposite positions inside the furnace 2, so that laser light emitted from the measurement laser light transmitting system 60 transmits through the combustion air in the furnace 2 is received by the measurement laser light receiving system 62. Particularly in the present embodiment, the measurement laser light transmitting system 60 and the measurement laser light receiving system 62 are disposed on a two-dimensional plane substantially along the horizontal direction at the downstream side of the outlet 40, and thereby the combustion air in the combustion completion region 52 can be analyzed.

The measurement laser light transmitting system 60 includes a laser diode capable of emitting a laser light which has an infrared wavelength range. The laser diode is a wavelength scanning type laser diode which is capable of adjusting the wavelength of the laser light output by driving electric current, and is capable of wavelength sweep on the basis of a command from the measurement laser controller 54. The wavelength scanning range of the measurement laser light transmitting system 60 is selected so as to include the wavelength corresponding to at least two electronic level transitions of the same gas type contained in the combustion air. Particularly in the present embodiment, the laser diode is selected so as to include wavelength corresponding to two electronic level transitions of $H_2O$, which is a type of gas contained in the combustion air. This is because, compared to $O_2$, $CO_2$, and the like also contained in the combustion air, $H_2O$ has a wavelength range corresponding to adjacent two electronic level transitions in a relatively close range.

As depicted in FIG. 3, a plurality of measurement laser light transmitting systems 60 and a plurality of measurement laser light receiving systems 62 are disposed inside the furnace 2. The furnace 2 has a substantially rectangular two-dimensional cross section, as seen from above in the vertical direction. In the present embodiment, the measurement laser light transmitting systems 60 and the measurement laser light receiving systems 62 are disposed on opposite sides from each other in the two-dimensional cross section. Provided that n is a natural number equal to or greater than two, n pairs of measurement laser light transmitting systems 60 and measurement laser light receiving systems 62 are disposed along each of the vertical direction and the horizontal direction in the drawing so that the measurement paths cross each other at a right angle. In other words, in the present embodiment, in total, 2n pairs of the measurement laser light transmitting systems 60 and the measurement laser light receiving systems 62 are provided. Accordingly, the measurement laser light transmitting systems 60 and the measurement laser light receiving systems 62 arranged as described above form 2n measurement paths P in total.

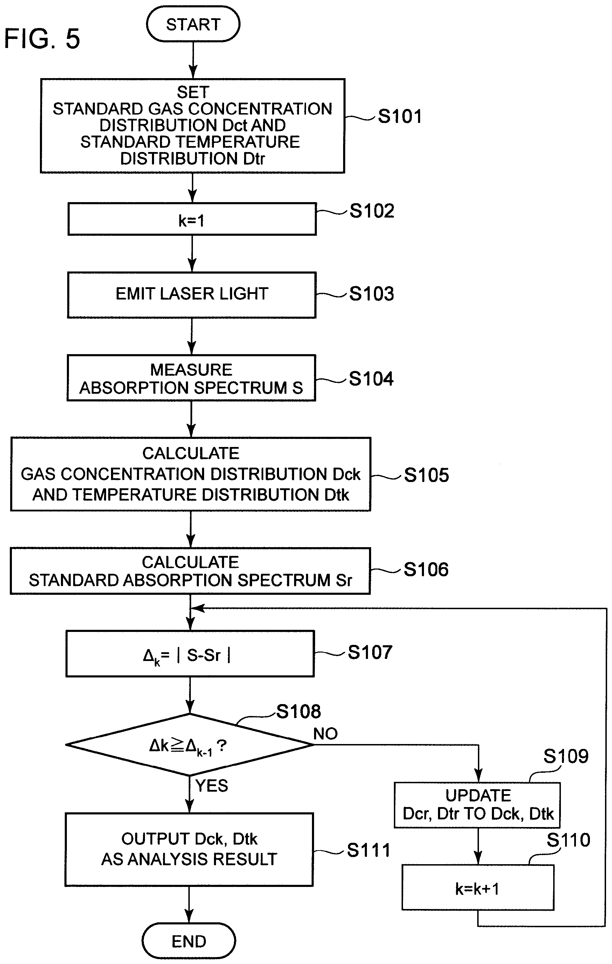

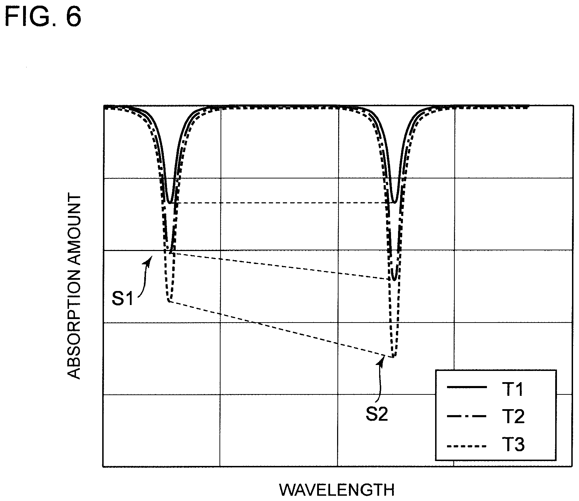

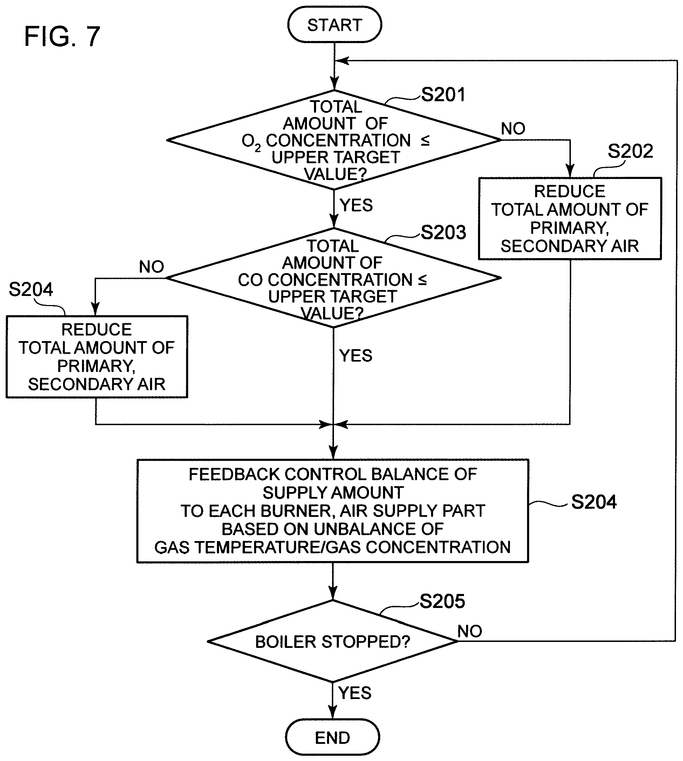

The infrared measurement analysis unit 56 obtains a measurement result by the measurement laser light receiving system 62, and performs a gas analysis utilizing two-dimensional solution analysis (tomography) on the basis of the measurement result. Next, with reference to FIGs. 4 to 7, the gas analysis method will be described in detail by each step. FIG. 4 is a block diagram showing a configuration of the infrared measurement analysis unit 56. FIG. 5 is a flowchart showing steps of a gas analysis method performed by the infrared measurement analysis unit 56 in FIG. 4. FIG. 6 is an example of an absorption spectrum measured by the measurement laser light receiving system 62. FIG. 7 is a flowchart showing steps of a method for controlling the distribution control unit 46 performed by the infrared measurement analysis unit 56 in FIG. 4.

As depicted in FIG 4, the infrared measurement analysis unit 56 includes a measurement part 64 for obtaining a measurement result of the measurement laser light receiving system 62, a standard setting part 66 for setting a standard gas concentration distribution and a standard temperature distribution as a two-dimensional distribution function, and an analysis part 68 configured to obtain the gas concentration distribution and the temperature distribution by convergence calculation so as to minimize the difference between the absorption amount and the standard absorption.

First, the standard setting part 66 sets a standard gas concentration distribution Dcr and a standard temperature distribution Dtr on the basis of the measurement result obtained by the measurement part 64 (step S101). The standard gas concentration distribution Dcr and the standard temperature distribution Dtr function as initial values when performing convergence calculation with the gas concentration distribution Dc and the temperature distribution Dt being variables, in the analysis performed by the analysis part 68.

The standard gas concentration distribution Dcr and the standard temperature distribution Dtr are set on the basis of an absorption amount (absorption spectrum) measured by the measurement laser light receiving systems 62 from laser light emitted into the combustion air by the measurement laser light transmitting system 60, the laser light including an absorption wavelength corresponding to at least two electronic level transitions of the same gas type contained in the combustion air. FIG. 6 shows an example of an absorption spectrum measured by the measurement laser light receiving system 62, the temperature of the combustion air showing three patterns T1, T2, and T3 (T1>T2>T3). In this spectrum, absorption spectra S1 and S2 are present in a wavelength region corresponding to adjacent two electronic level transitions of $H_2O$ contained in combustion air. S1 is an absorption spectrum corresponding to the first level transition and S2 is an absorption spectrum corresponding to the second level transition.

The peak rate of the absorption spectra S1 to S2 changes depending on the temperature of the combustion air. Thus, by determining in advance a correlation between the peak ratio of the absorption spectra S1 to S2 and the temperature of combustion air, it is possible to obtain the temperature of combustion air corresponding to the peak ratio of absorption spectra S1 to S2 based on an actual measurement value. The temperature of combustion air obtained as described above corresponds to an average temperature in the measurement path on which the absorption spectrum is measured. The standard setting part 66 utilizes such temperature dependency of the peak ratio to obtain the average temperature in each measurement path on the basis of the absorption wavelength spectra S1 and S2 measured in the respective measurement paths P. Then, the average temperatures of the respective measurement paths are further averaged, thereby calculating the average temperature of combustion air in the furnace 2. Then, the standard setting part 66 sets the standard gas concentration distribution Dcr and the standard temperature distribution Dtr so as to obtain a temperature distribution in which temperatures are constant at the average temperature calculated accordingly over the plane including the plurality of measurement paths P.

Referring again to FIG. 5, subsequently, the analysis part 68 prepares an increment variable k for control when performing the following analysis, and sets the initial value of the variable k to "one" (step S102). The measurement laser controller 54 sends a command to the measurement laser light transmitting systems 60 to emit laser light to combustion air (step S103). Furthermore, the measurement laser light receiving systems 62 receive laser light from the measurement laser light transmitting systems 60, and the infrared measurement analysis unit 56 obtains an absorption spectrum S in the plurality of measurement paths from the measurement result (step S104).

In the following description, absorption spectra S corresponding to the respective 2n measurement paths P are individually referred to as "$S_1, S_2, ..., S_{2n}$".

The analysis part 68 estimates the gas concentration distribution $Dc_k$ and the temperature distribution $Dt_k$, which are two-dimensional distributions, by reconfiguration, on the basis of the absorption spectra $S_1, S_2, S_3, ..., S_{2n}$ corresponding to the plurality of measurement paths (step S105). In the estimation calculation of step S105, the analysis part 68 determines the gas concentration distribution $Dc_k$ and the temperature distribution $Dt_k$ as functions including common variable parameters. The function is set corresponding to the shape of the furnace 2 where combustion air to be analyzed exists, on the basis of, for instance, a common cylindrical coordinate system (e.g. the radial directional low-order Fourier series expansion or the Gaussian distribution), further using a two-dimensional distribution function including parameters such as a position of the center axis of the cylindrical coordinate system, an ovalization rate of the coordinate, and a circumferential directional distribution term.

Particularly in the present embodiment, taking into consideration that there is correlation between the gas concentration distribution $Dc_k$ and the temperature distribution $Dt_k$, the functions representing the gas concentration distribution $Dc_k$ and the temperature distribution $Dt_k$ are set so that the functions share at least the parameters of the position of the center axis of the cylindrical coordinate system and the ovalization rate of the coordinate. Accordingly, an impact of the temperature distribution of combustion air is taken into consideration when calculating the gas concentration distribution, and thereby it is possible to obtain an analysis result that is closer to the actual distribution. Described below is an example of a function derived from the above technical idea.

$$(x, \ y) = \left[ A + \sum_i \{ B_i \cos(iR') + C_i \sin(iR') \} \right] * \left[ 1 + (1 - \exp(R'/\sqrt{wid_x{}^2 + wid_y{}^2})) \sum_k \{ D_k \cos(iR') + E_k \sin(iR') \} \right] \quad (1)$$

In the expression (1), x is the gas concentration distribution $Dc_k$, and y is the temperature distribution $Dt_k$, satisifying the following expression.

$$R' = \sqrt{X^2 + Y^2}$$

$$\begin{pmatrix} X \\ Y \end{pmatrix} = \pi(wid_x \quad wid_y) \begin{pmatrix} \cos\theta & -\sin\theta \\ \sin\theta & \cos\theta \end{pmatrix} \begin{pmatrix} x - x_c \\ y - y_c \end{pmatrix}$$

In the expression (1), A is the physical-amount center value, B and C are radial distribution coefficients, $D_k$ and $E_k$ are circumferential distribution coefficients, widx and widy are ovalization rates of the coordinate, and xc and yc are center-axis positions of the cylindrical coordinate system.

In the iterative calculation, the Marquardt method is used, for instance, to update each of the parameters (A, $B_i$, $C_i$, $D_k$, $E_k$, widx, widy, xc, yc) so as to reduce the difference between the obtained absorption spectrum S and the analytic absorption spectrum Sr.

Next, a standard absorption spectrum Sr in a plurality of measurement paths is obtained on the basis of the standard gas concentration distribution Dcr and the standard temperature distribution Dtr set in step S101 (S106), and the difference $\Delta_k$ between the standard absorption spectrum Sr and the absorption spectrum S obtained in step S104 is obtained from an expression: $\Delta_k=|S-Sr|$ (Step S107).

Subsequently, the analysis part 68 determines whether $\Delta_k$ obtained in step S107 is equal to or greater than $\Delta_{k-1}$ (step S108). If $\Delta_k$ is less than $\Delta_{k-1}$ (step S108: NO), it means that the difference is reduced compared to the previous control loop, and thus the gas concentration distribution $Dc_k$ and the temperature distribution $Dt_k$ estimated in step S105 are updated as the standard gas concentration distribution Dcr and the standard temperature distribution Dtr (step S109). Then, an increment variable is added (step S110), and the process is returned to step S107.

As a result of repetition of the process of steps S107 to S110, if $\Delta_k$ becomes not less than $\Delta_{k-1}$ (step S108: NO), the analysis part 68 determines that the solution has converged, and outputs the gas concentration distribution $Dc_k$ and the temperature distribution $Dt_k$ estimated in step S205 as analysis results (step S111). As described above, in the present embodiment, when the two-dimensional distribution of the gas concentration is calculated, the gas concentration distribution $Dc_k$ and the temperature distribution $Dt_k$ are treated as variables at the same time, and a solution is sought so as to minimize the difference $\Delta_k$.

The gas concentration distribution $Dc_k$ and the temperature distribution $Dt_k$, which are solutions derived as described above, are transmitted to the distribution control unit 46 and the two-dimensional measurement result display part 58 as analysis results. The distribution control unit 46 adjusts the flow-rate adjustment valves 22, 38, 44 on the basis of the gas concentration distribution $Dc_k$ and the temperature distribution $Dt_k$ analyzed by the gas analysis device 10, and thereby controls the fuel supply unit 12, the primary-air supply unit 26, and the secondary-air supply unit 28.

Now, with reference to FIG. 7, a control example of the distribution control unit 46 will be described in detail. In this example, the concentration distribution of $O_2$ and $CO_2$ contained in the combustion air as the gas concentration distribution $Dc_k$ is obtained as an analysis result.

First, the distribution control unit 46 determines whether the total amount of the $O_2$ concentration in the furnace 2 is equal to or less than an upper limit target value on the basis of the gas concentration distribution $Dc_k$ (step S201). If the total amount of the $O_2$ concentration is greater than the upper limit target value (step S201: NO), the distribution control unit 46 controls the burner 16 and the flow-rate adjustment valves 22, 38, 44 so as to reduce the total amount of the primary air and the secondary air (step S202).

On the other hand, if the total amount of the $O_2$ concentration is equal to or less than the upper limit target value (step S 201: YES), the distribution control unit 46 further determines whether the total amount of $CO_2$ concentration is equal to or less than the upper limit target value (step S203). If the total amount of the $CO_2$ concentration is greater than the upper limit target value (step S203: NO), the distribution control unit 46 controls the burner 16 and the flow-rate adjustment valves 22, 38, 44 so as to reduce the total amount of the primary air and the secondary air (step S204).

In contrast, if the total amount of the $CO_2$ concentration is equal to or less than than the upper limit value (YES in step S203), the distribution control unit 46 feedback-controls the balance of the burner 16 and the flow-rate adjustment valves 22, 38, 44 on the basis of the unbalance in the gas concentration distribution $Dc_k$ and the temperature distribution $Dt_k$ (step S204). During such a feedback control, it is determined whether the combustion facility 1 is stopped (step S205). If the combustion facility 1 is in operation (step S205: NO), the process is returned to S201, and the above control is repeated. On the other hand, if the combustion facility 1 stops (step S205: YES), the series of processes is ended (END).

As described above, the distribution control unit 46 controls the supply amount of the fuel, the primary air, and the secondary air to the furnace 2, and thereby achieves an optimum operation in which the temperature unbalance and excess/shortage of oxygen supply in the furnace 2 are solved, thus improving the power generation efficiency and suppressing an increase in the $NO_x$ generation due to excessive $O_2$. Further, the two-dimensional measurement display part 58 visualizes the gas concentration distribution $Dc_k$ and the temperature distribution $Dt_k$ for an operator with a display unit such as a display monitor, which makes it easier to monitor the combustion state in the furnace 2.

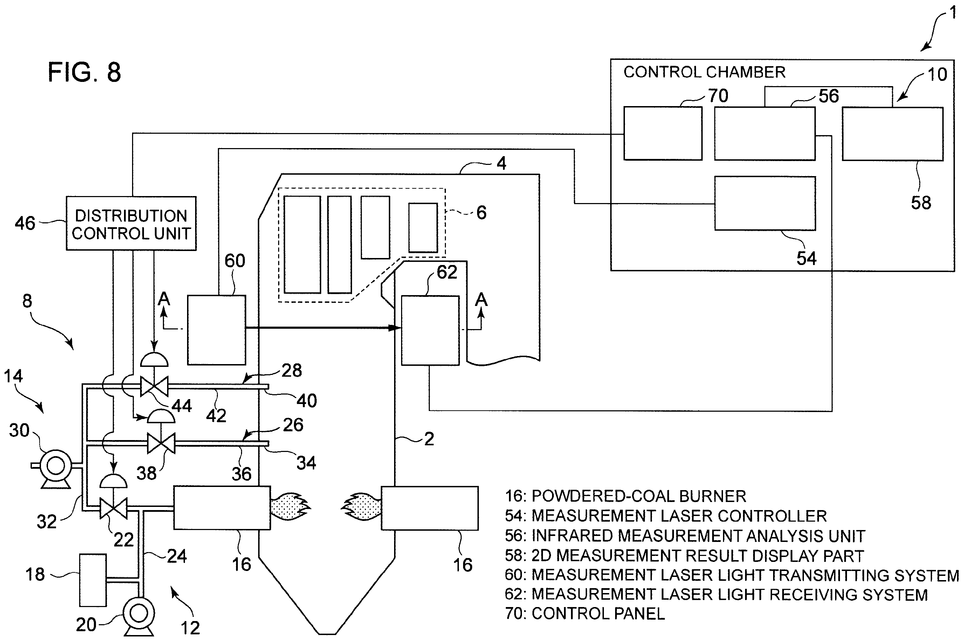

FIG. 8 is a schematic diagram of a configuration of the combustion facility 1 according to another embodiment of the present embodiment. In the present embodiment, a control panel 70 that can be operated by an operator is provided for a control chamber. The control panel 70 transmits a control signal corresponding to the content of an input operation to the distribution control unit 46, and thereby operates the distribution control unit 46. The control signal transmitted from the control panel 70 to the distribution control unit 46 is equivalent to the control signal that the infrared measurement analysis unit 56 transmits to the distribution control unit 46 in FIG. 1, and controls the fuel supply unit 12, the primary-air supply unit 26, and the secondary-air supply unit 28. In other words, in the present embodiment, an operator controls the control panel 70 to manually operate the distribution control unit 46 and adjust the combustion state.

In the control chamber, a two-dimensional measurement result display part 58 is disposed, which displays an analysis result by the infrared measurement analysis unit 56. The two-dimensional measurement result display part 58 is, for instance, a unit for visualizing an analysis result for an operator in the control chamber, on a display unit such as a display monitor.

An operator of the control panel 70 refers to an analysis result displayed on the two-dimensional measurement result display part 58, which is a display unit such as a display monitor, and thereby determines the combustion state inside the furnace 2 and operates the control panel 70 in accordance with the determination result. As described above, in the present embodiment, the operator can perform works efficiently while determining the combustion state of the furnace 2 easily.

As described above, according to the present embodiment, it is possible to provide a gas analysis device for accurately analyzing a gas concentration distribution and a temperature distribution in a system in which combustion gas inside a furnace is not evenly mitigated, a control system and a control assistance system for a combustion, and a gas analysis method.

Industrial Applicability

The present disclosure can be applied to a gas analysis device for analyzing a gas concentration distribution and a temperature distribution inside a furnace, a control system and a control assistance system for a combustion facility provided with the gas analysis device, and a gas analysis method performed by the gas analysis device.

Description of Reference Numerals

| | |
|---|---|
| 1 | Combustion facility |
| 2 | Combustion furnace |
| 4 | Flue |
| 6 | Re-heating unit |

| 8 | Combustion controller |
|---|---|
| 10 | Gas analysis device |
| 12 | Fuel supply unit |
| 14 | Air supply unit |
| 16 | Powdered-coal burner |
| 18 | Powdered-coal supply part |
| 20, 30 | Blower |
| 22, 38, 44 | Flow-rate adjustment valve |
| 24 | Pipe |
| 26 | Primary-air supply unit |
| 28 | Secondary-air supply unit |
| 32 | Main pipe |
| 34 | Outlet |
| 36 | First pipe |
| 42 | Second pipe |
| 46 | Distribution control unit |
| 48 | Burner combustion region |
| 50 | Non-combusted fuel existence reduction region |
| 52 | Combustion completion region |
| 54 | Measurement laser controller |
| 56 | Infrared measurement analysis unit |
| 58 | Two-dimensional measurement result display part |
| 60 | Measurement laser light transmitting system |
| 62 | Measurement laser light receiving system |
| 64 | Measurement part |
| 66 | Standard setting part |
| 68 | Analysis part |
| 70 | Control panel |

**Claims**

1. A gas analysis device for analyzing a concentration distribution of a combustion gas in a furnace and a temperature distribution inside the furnace, the gas analysis device comprising:

   a measurement part configured to measure an absorption amount of a laser light including an absorption wavelength corresponding to at least two electronic level transitions having the same component contained in the combustion gas, by emitting the laser light on a plurality of measurement paths disposed so as to pass through the combustion gas;
   a standard setting part configured to set a standard gas concentration distribution and a standard temperature distribution on the basis of a measurement result of the measurement part; and
   an analysis part configured to obtain the gas concentration distribution and the temperature distribution by solving a function including the gas concentration distribution and the temperature distribution as variables so as to minimize a difference between the absorption amount measured by the measurement part and a standard absorption amount obtained on the basis of the standard gas concentration distribution and the standard temperature distribution.

2. The gas analysis device according to claim 1, wherein the function is set corresponding to a shape of the furnace.

3. The gas analysis device according to claim 2, wherein the function is set so as to include at least one of a center axis position, a coordinate ovalization rate, or a circumferential distribution term as a parameter, with respect to a cylindrical coordinate system.

4. The gas analysis device according to any one of claims 1 to 3, wherein the standard setting part is configured to set the standard concentration distribution and the standard temperature distribution on the basis of an average temperature of the combustion gas obtained on the basis of a ratio of the absorption amount at wavelengths corresponding to different electronic level transitions included in the laser light in the plurality of measurement paths.

**5.** The gas analysis device according to claim 4, wherein the same component is $H_2O$.

**6.** A control system for a combustion facility, comprising:

a fuel supply unit configured to supply fuel to the furnace;
an air supply unit configured to supply air to the furnace;
the gas analysis device according to any one of claims 1 to 5; and
a control unit configured to control a supply amount of the fuel and the air to the furnace by adjusting the fuel supply unit and the air supply unit on the basis of the gas concentration distribution and the temperature distribution analyzed by the gas analysis device.

**7.** A control assistance system for a combustion facility, comprising:

a fuel supply unit configured to supply fuel to the furnace;
an air supply unit configured to supply air to the furnace;
the gas analysis device according to any one of claims 1 to 5; and
a display unit configured to display the gas concentration distribution and the temperature distribution analyzed by the gas analysis device.

**8.** A gas analysis method for analyzing a concentration distribution of combustion gas in a furnace and a temperature distribution inside the furnace, the method comprising:

a measurement step of measuring an absorption amount of a laser light including an absorption wavelength corresponding to at least two electronic level transitions having the same component contained in the combustion gas, by emitting the laser light on a plurality of measurement paths disposed so as to pass through the combustion gas;
a standard setting step of setting a standard gas concentration distribution and a standard temperature distribution on the basis of a measurement result in the measurement step; and
an analysis step of obtaining the gas concentration distribution and the temperature distribution by solving a function including the gas concentration distribution and the temperature distribution as variables so as to minimize a difference between the absorption amount measured in the measurement step and a standard absorption amount obtained on the basis of the standard gas concentration distribution and the standard temperature distribution.

**Amended claims under Art. 19.1 PCT**

**1.** A gas analysis device for analyzing a concentration distribution of a combustion gas in a furnace and a temperature distribution inside the furnace, the gas analysis device comprising:

a measurement part configured to measure an absorption amount of a laser light including an absorption wavelength corresponding to at least two electronic level transitions having the same component contained in the combustion gas, by emitting the laser light on a plurality of measurement paths disposed so as to pass through the combustion gas;
a standard setting part configured to set a standard gas concentration distribution and a standard temperature distribution on the basis of a measurement result of the measurement part; and
an analysis part configured to define the gas concentration distribution and the temperature distribution defined as a function including a common variable parameter and to obtain the gas concentration distribution and the temperature distribution by obtaining the common variable parameter so as to minimize a difference between the absorption amount measured by the measurement part and a standard absorption amount obtained on the basis of the standard gas concentration distribution and the standard temperature distribution.

**2.** The gas analysis device according to claim 1, wherein the function is set corresponding to a shape of the furnace.

**3.** The gas analysis device according to claim 2, wherein the function is set so as to include at least one of a center axis position, a coordinate ovalization rate, or a circumferential distribution term as a parameter, with respect to a cylindrical coordinate system.

**4.** The gas analysis device according to any one of claims 1 to 3, wherein the standard setting part is configured to set the standard concentration distribution and the standard temperature distribution on the basis of an average temperature of the combustion gas obtained on the basis of a ratio of the absorption amount at wavelengths corresponding to different electronic level transitions included in the laser light in the plurality of measurement paths.

**5.** The gas analysis device according to claim 4, wherein the same component is $H_2O$.

**6.** A control system for a combustion facility, comprising:

a fuel supply unit configured to supply fuel to the furnace;
an air supply unit configured to supply air to the furnace;
the gas analysis device according to any one of claims 1 to 5; and
a control unit configured to control a supply amount of the fuel and the air to the furnace by adjusting the fuel supply unit and the air supply unit on the basis of the gas concentration distribution and the temperature distribution analyzed by the gas analysis device.

**7.** A control assistance system for a combustion facility, comprising:

a fuel supply unit configured to supply fuel to the furnace;
an air supply unit configured to supply air to the furnace;
the gas analysis device according to any one of claims 1 to 5; and
a display unit configured to display the gas concentration distribution and the temperature distribution analyzed by the gas analysis device.

**8.** A gas analysis method for analyzing a concentration distribution of combustion gas in a furnace and a temperature distribution inside the furnace, the method comprising:

a measurement step of measuring an absorption amount of a laser light including an absorption wavelength corresponding to at least two electronic level transitions having the same component contained in the combustion gas, by emitting the laser light on a plurality of measurement paths disposed so as to pass through the combustion gas;
a standard setting step of setting a standard gas concentration distribution and a standard temperature distribution on the basis of a measurement result in the measurement step; and
an analysis step of defining the gas concentration distribution and the temperature distribution defined as a function including a common variable parameter and obtaining the gas concentration distribution and the temperature distribution by obtaining the common variable parameter so as to minimize a difference between the absorption amount measured in the measurement step and a standard absorption amount obtained on the basis of the standard gas concentration distribution and the standard temperature distribution.

FIG. 1

CONTROL CHAMBER

DISTRIBUTION CONTROL UNIT

16: POWDERED-COAL BURNER
54: MEASUREMENT LASER CONTROLLER
56: INFRARED MEASUREMENT ANALYSIS UNIT
58: 2D MEASUREMENT RESULT DISPLAY PART
60: MEASUREMENT LASER LIGHT TRANSMITTING SYSTEM
62: MEASUREMENT LASER LIGHT RECEIVING SYSTEM

EP 3 246 694 A1

13

FIG. 2

4 — FURNACE OUTLET

2 —

40 —

52 -- COMBUSTION COMPLETION REGION

34 —

50 -- NON-COMBUSTED FUEL EXISTENCE REDUCTION REGION

48 -- BURNER COMBUSTION REGION

16

FIG. 3

FIG. 4

62:MEASUREMENT LASER LIGHT RECEIVING SYSTEM

46:DISTRIBUTION CONTROL UNIT
58:2D MEASUREMENT RESULT DISPLAY PART

FIG. 5

START

SET
STANDARD GAS CONCENTRATION
DISTRIBUTION Dct AND
STANDARD TEMPERATURE
DISTRIBUTION Dtr — S101

$k=1$ — S102

EMIT LASER LIGHT — S103

MEASURE
ABSORPTION SPECTRUM S — S104

CALCULATE
GAS CONCENTRATION DISTRIBUTION Dck
AND TEMPERATURE DISTRIBUTION Dtk — S105

CALCULATE
STANDARD ABSORPTION SPECTRUM Sr — S106

$\Delta_k = |S-Sr|$ — S107

S108

$\Delta k \geqq \Delta_{k-1}$ ? — NO

YES

OUTPUT Dck, Dtk
AS ANALYSIS RESULT — S111

UPDATE
Dcr, Dtr TO Dck, Dtk — S109

$k=k+1$ — S110

END

FIG. 6

FIG. 7

START

S201
TOTAL
AMOUNT OF
$O_2$ CONCENTRATION ≤
UPPER TARGET
VALUE?

NO → S202
REDUCE
TOTAL AMOUNT OF
PRIMARY,
SECONDARY AIR

YES

S203
TOTAL
AMOUNT OF
CO CONCENTRATION ≤
UPPER TARGET
VALUE?

NO
S204
REDUCE
TOTAL AMOUNT OF
PRIMARY,
SECONDARY AIR

YES

FEEDBACK CONTROL BALANCE OF
SUPPLY AMOUNT
TO EACH BURNER, AIR SUPPLY PART
BASED ON UNBALANCE OF
GAS TEMPERATURE/GAS CONCENTRATION
S204

S205
BOILER STOPPED? NO

YES

END

**FIG. 8**

16: POWDERED-COAL BURNER
54: MEASUREMENT LASER CONTROLLER
56: INFRARED MEASUREMENT ANALYSIS UNIT
58: 2D MEASUREMENT RESULT DISPLAY PART
60: MEASUREMENT LASER LIGHT TRANSMITTING SYSTEM
62: MEASUREMENT LASER LIGHT RECEIVING SYSTEM
70: CONTROL PANEL

EP 3 246 694 A1

## INTERNATIONAL SEARCH REPORT

| | International application No. |
| --- | --- |
| | PCT/JP2015/083005 |

A.  CLASSIFICATION OF SUBJECT MATTER
*G01N21/39*(2006.01)i, *F23N1/02*(2006.01)i, *F23N5/00*(2006.01)i, *F23N5/08*(2006.01)i, *G01K11/00*(2006.01)i, *G01N21/3504*(2014.01)i, *G01N21/3554*(2014.01)i

According to International Patent Classification (IPC) or to both national classification and IPC

B.  FIELDS SEARCHED

Minimum documentation searched (classification system followed by classification symbols)
G01N21/39, F23N1/02, F23N5/00, F23N5/08, G01K11/00, G01N21/3504, G01N21/3554

Documentation searched other than minimum documentation to the extent that such documents are included in the fields searched
Jitsuyo Shinan Koho         1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2015-40747 A  (The University of Tokushima), 02 March 2015 (02.03.2015), fig. 6, 10 & WO 2015/025919 A1 | 1-8 |
| Y | US 6271522 B1  (Deutsches Zentrum fur Luft-und Raumfahrt E.V.), 07 August 2001 (07.08.2001), column 10, line 36 to column 13, line 23; fig. 4 & EP 0959341 A1 | 1-8 |
| A | JP 62-116225 A  (Mitsubishi Heavy Industries, Ltd.), 27 May 1987 (27.05.1987), fig. 1 to 2 (Family: none) | 1-8 |

| ☒ Further documents are listed in the continuation of Box C. | ☐ See patent family annex. |
| --- | --- |

| *     Special categories of cited documents: | "T"   later document published after the international filing date or priority |
| --- | --- |
| "A"   document defining the general state of the art which is not considered    to be of particular relevance | date and not in conflict with the application but cited to understand the principle or theory underlying the invention |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search     02 February 2016 (02.02.16) | Date of mailing of the international search report     16 February 2016 (16.02.16) |
| --- | --- |
| Name and mailing address of the ISA/     Japan Patent Office     3-4-3,Kasumigaseki,Chiyoda-ku,     Tokyo 100-8915,Japan | Authorized officer      Telephone No. |

Form PCT/ISA/210 (second sheet) (January 2015)

**INTERNATIONAL SEARCH REPORT**

International application No.

PCT/JP2015/083005

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2011-137467 A  (General Electric Co.),<br>14 July 2011 (14.07.2011),<br>fig. 4 to 9<br>& US 2011/0154806 A1<br>fig. 4 to 9 | 1-8 |

Form PCT/ISA/210 (continuation of second sheet) (January 2015)

**EP 3 246 694 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006522938 A